# EUROPEAN PATENT APPLICATION

(11) **EP 4 418 058 A1**
(43) Date of publication of application: **21.08.2024**
(21) Application number: 22880757.4
(22) Date of filing: 26.09.2022
(51) Int. Cl.: G05B 19/409, B23Q 15/00, G06F 3/0481

(54) **MACHINING PROCESS SYSTEM AND HELP PROCESSING METHOD**

(30) Priority: 14.10.2021 JP 2021169060
(71) Applicant: SEIBU ELECTRIC & MACHINERY CO., LTD., Fukuoka-ken Fukuoka 811-3193 (JP)
(72) Inventor: INOUE Tomoki, Koga-shi, Fukuoka 811-3193 (JP); ONO Fumihiro, Koga-shi, Fukuoka 811-3193 (JP); FUKUHARA Shogo, Koga-shi, Fukuoka 811-3193 (JP); KAWAKATSU Shota, Koga-shi, Fukuoka 811-3193 (JP); NAGANO Kyutaro, Koga-shi, Fukuoka 811-3193 (JP); NAKAGAWA Koyo, Koga-shi, Fukuoka 811-3193 (JP); TSUGAMI Seiya, Koga-shi, Fukuoka 811-3193 (JP); SHINOZAKI Eigo, Koga-shi, Fukuoka 811-3193 (JP); INOUE Daisuke, Koga-shi, Fukuoka 811-3193 (JP)
(74) Representative: Plougmann Vingtoft a/s
(86) International application number: PCT/JP2022/035640
(87) International publication number: WO 2023/063061

(57) **Abstract**

A machining processing system or the like is provided, suitable for supporting a help display that corresponds to the user's level while providing safe operation of a machining processing apparatus. In a machining processing apparatus 2 in a machining processing system 1, an interface processing unit 13 displays an interface screen and gives instructions to a control unit 11 according to the user's operation. A help processing unit 15 displays an explanation with respect to the user's operation via the interface screen according to the user's operation. Upon receiving an instruction from the help processing unit 15 to change the interface screen, the control unit 11 controls the interface processing unit 13 to change the interface screen. The help processing unit 15 does not support an instruction for a machining unit 7 to perform machining processing, for example.

## Description

### Technical Field

The present invention relates to a machining processing system and a help processing method, and particularly to a machining processing system or the like provided with a machining processing apparatus that performs machining of a workpiece according to multiple setting processes specified by the user.

### Background Art

An arrangement in which a guidance message is displayed when editing NC data, which is a program including a specification of the processes for a machining apparatus, is described in Patent document 1.

### Citation List

### Patent Literature

### [Patent document 1]

Japanese Patent Application Laid Open No. 2003-186511

### Summary of Invention

### Technical Problem

However, there are various levels of users such as beginner-level users, advanced-level users, etc. In a case in which the user is a beginner-level user, an arrangement may be made in which the user is instructed to sequentially edit individual items according to guidance as described in Patent document 1. However, such an arrangement involves additional operations that differ from editing using an interface screen according to a conventional technique. Furthermore, for an advanced-level user, it is a roundabout process to sequentially set individual items. That is to say, it is important for such an advanced-level user to directly access necessary information.

Furthermore, in a case of allowing the user to perform editing according to guidance, such an arrangement allows the user to edit the machining conditions or the like in addition to editing using the conventional interface screen. Moreover, such an arrangement involves a problem in that the user can unintentionally start machining processing using a help display screen. That is to say, such an arrangement has the potential to produce a dangerous state for the user.

Accordingly, it is a purpose of the present invention to provide a machining processing system or the like suitable for enabling a help display according to the user's level while ensuring safe operation of a machining processing apparatus.

### Solution of Problem

A first aspect of the present invention relates to a machining processing system provided with a machining processing apparatus configured to support machining processing for a workpiece according to multiple setting processes made by a user. The machining processing apparatus includes: a processing unit; a machining unit configured to support machining processing; and an input/output unit configured to support input/output processing. The processing unit includes a control unit, an interface processing unit, and a help processing unit. The interface processing unit operates according to control of the control unit, displays an interface screen via the input/output unit, and makes an instruction to the control unit according to an operation by the user. The help processing unit provides a help display including a first display region, a second display region, and a third display region. The first display region displays each step of a setting process for machining processing. The second display region displays items included in each step. The third display region displays an explanation for each item. When an object on an interface screen is to be explained in the third display region, the help processing unit instructs the control unit to display an interface screen including the object to be explained. The help processing unit does not instruct the machining unit to perform machining processing. The control unit controls the machining unit of the machining processing apparatus according to an instruction from the interface processing unit. Upon receiving an instruction from the help processing unit to change the interface screen, the control unit controls the interface processing unit to change the interface screen.

A second aspect of the present invention relates to the machining processing system according to the first aspect. When the interface screen that is being displayed in a current stage includes all of one or multiple objects to be explained, the control unit continues to display the interface screen that is being displayed in the current stage. When the interface screen that is being displayed in a current stage does not include all of one or multiple objects to be explained, the control unit switches the interface screen that is being displayed in the current stage to an interface screen including all the objects to be explained.

A third aspect of the present invention relates to the machining processing system according to the first aspect or the second aspect. When the instruction from the help processing unit is not an instruction relating to a display of an interface screen, the control unit does not perform processing according to the instruction.

A fourth aspect of the present invention relates to the machining processing system according to any one of the first aspect through the third aspect. The machining processing system includes a terminal device that differs from the machining processing apparatus. The terminal device is capable of communicating with the machining processing apparatus, and includes a terminal processing unit and a terminal input/output unit. The terminal processing unit includes a terminal help processing unit. The terminal help processing unit displays an explanation with respect to an operation by the user via the terminal input/output unit and makes an instruction to the control unit, according to an instruction by the user. The terminal help processing unit does not instruct the machining unit to perform machining processing. Upon receiving an instruction from the terminal help processing unit to change the interface screen, the control unit controls the interface processing unit to change the interface screen. Upon receiving an instruction that is not related to a display of the interface screen from the terminal help processing unit, the control unit does not perform processing according to the instruction.

A fifth aspect of the present invention relates to a help processing method employed in a machining processing system provided with a machining processing apparatus configured to support machining processing for a workpiece according to multiple setting processes made by a user. The machining processing apparatus includes: a processing unit; a machining unit configured to support machining processing; and an input/output unit configured to support input/output processing. The processing unit includes a control unit, an interface processing unit, and a help processing unit. The interface processing unit operates according to control of the control unit, displays an interface screen via the input/output unit, and makes an instruction to the control unit according to an operation by the user. The help processing unit provides a help display including a first display region, a second display region, and a third display region. The first display region displays each step of a setting process for machining processing. The second display region displays items included in each step. The third display region displays an explanation for each item. When an object on an interface screen is to be explained in the third display region, the help processing unit instructs the control unit to display an interface screen including the object to be explained. The help processing unit does not instruct the machining unit to perform machining processing. The control unit controls the machining unit of the machining processing apparatus according to an instruction from the interface processing unit. Upon receiving an instruction from the help processing unit to change the interface screen, the control unit controls the interface processing unit to change the interface screen.

A sixth aspect of the present invention relates to the help processing method according to the fifth aspect. When the interface screen that is being displayed in a current stage includes all of one or multiple objects to be explained, the control unit continues to display the interface screen that is being displayed in the current stage. When the interface screen that is being displayed in a current stage does not include all of one or multiple objects to be explained, the control unit switches the interface screen that is being displayed in the current stage to an interface screen including all the objects to be explained.

A seventh aspect of the present invention relates to the help processing method according to the fifth aspect or the sixth aspect. When the instruction from the help processing unit is not an instruction relating to a display of an interface screen, the control unit does not perform processing according to the instruction.

An eighth aspect of the present invention relates to the help processing method according to any one of the fifth aspect through the seventh aspect. A terminal device that differs from the machining processing apparatus is provided. The terminal device is capable of communicating with the machining processing apparatus, and includes a terminal processing unit and a terminal input/output unit. The terminal processing unit includes a terminal help processing unit. The terminal help processing unit displays an explanation with respect to an operation by the user via the terminal input/output unit and makes an instruction to the control unit, according to an instruction by the user. The terminal help processing unit does not instruct the machining unit to perform machining processing. Upon receiving an instruction from the terminal help processing unit to change the interface screen, the control unit controls the interface processing unit to change the interface screen. Upon receiving an instruction that is not related to a display of the interface screen from the terminal help processing unit, the control unit does not perform processing according to the instruction.

### Advantageous Effects of Invention

With each aspect of the present invention, the interface screen and help display are provided in cooperation with each other so as to appropriately present information for supporting the user. This is capable of supporting a help display that corresponds to the user's level.

### Brief Description of Drawings

Fig. 1A is a block diagram showing an example configuration of a machining processing system according to an embodiment of the present invention, and Fig. 1B is a flowchart showing an example of processing thereof.
Fig. 2 shows an example of a manual of a machining processing apparatus 2.
Fig. 3 is a first diagram showing an example of display processing provided by an interface processing unit 13 and a help processing unit 15.
Fig. 4 is a second diagram showing an example of display processing provided by the interface processing unit 13 and the help processing unit 15.
Fig. 5A is a block diagram showing an example configuration of a machining processing system according to another embodiment of the present invention, and Fig. 5B is a flowchart showing an example of processing thereof.
Fig. 6 is a block diagram showing an example of a configuration of a machining processing system according to a yet another embodiment of the present invention.

### Description of Embodiments

Description will be made with reference to the drawings regarding an embodiment of the present invention. It should be noted that such an embodiment of the present invention is not restricted to an example described below.

### [Examples]

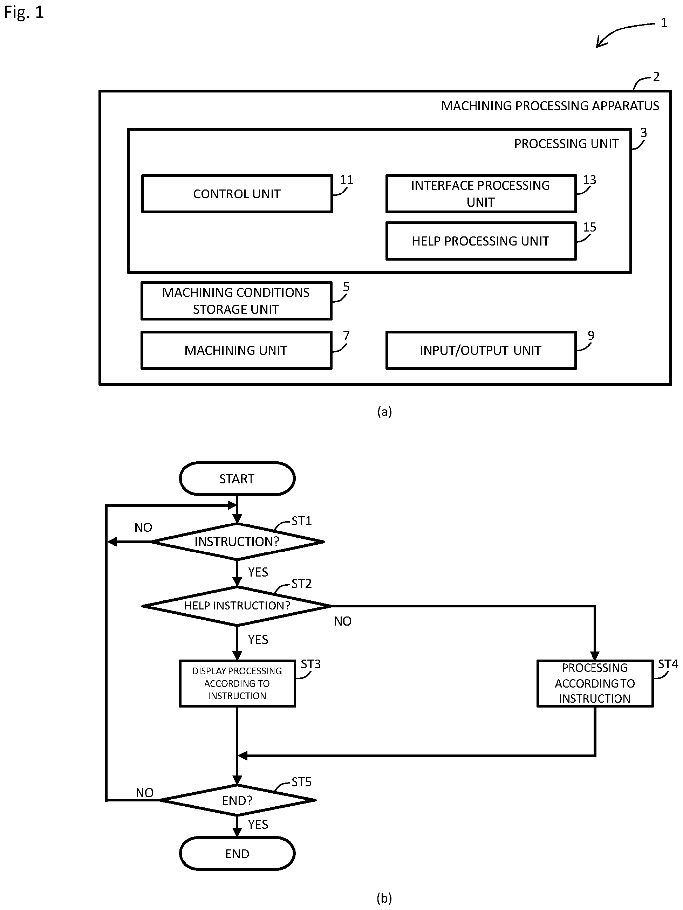

Fig. 1A is a block diagram showing an example of the configuration of a machining processing system according to an embodiment of the present invention. Fig. 1B is a flowchart showing an example of the processing. Description will be made with reference to Fig. 1 regarding an example of the configuration and the processing of a machining processing system 1.

The machining processing system 1 is provided with a machining processing apparatus 2.

The machining processing apparatus 2 includes a processing unit 3, a processing conditions storage unit 5, a machining unit 7, and an input/output unit 9.

The processing unit 3 is configured as a processor that operates according to a program, for example. The processing unit 3 includes a control unit 11, an interface processing unit 13, and a help processing unit 15.

The machining conditions storage unit 5 is configured as memory that store the machining conditions.

The machining unit 7 performs machining processing (wire electrical discharge machining or the like) for a workpiece according to the machining conditions.

The input/output unit 9 is configured as a touch panel, display, keyboard, mouse, or the like, for example. The input/output unit 9 is configured to present information to the user, and to allow the user to input information.

The control unit 11 performs processing (e.g., generation, modification, deletion, etc.) of the machining conditions stored in the machining conditions storage unit 5, and instructs the machining unit 7 to machine a workpiece according to the information input by the user via the input/output unit 9.

The interface processing unit 13 instructs the input/output unit 9 to display an interface screen so as to present information such as machining conditions, etc., to the user and to process an instruction for modification or the like input by the user, and so as to present information for a button, etc., that allows the user to make a machining instruction so as to process the machining instruction input by the user.

The help processing unit 15 presents information via the input/output unit 9 according to an operation by the user in order to support the operation of the interface screen by the user.

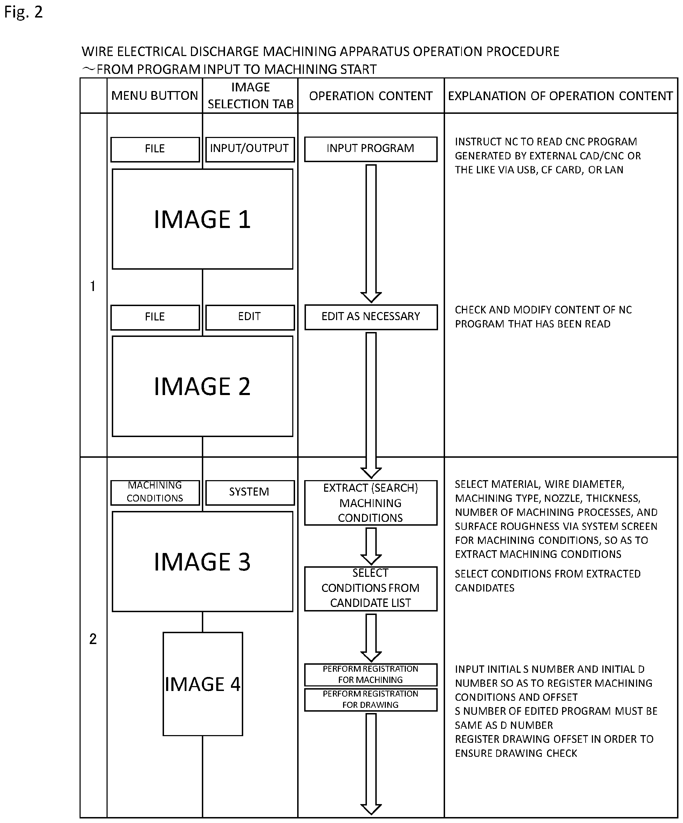

Fig. 2 shows an example of a manual for the machining processing apparatus 2. In the manual, the position of each step is described with respect to the entire setting process for setting the machining processing. The information to be input via the interface screen in each step is described together with the real-world meaning thereof.

The help processing unit 15 is required to display information so as to allow the user to understand the position of each step, and to help the user to understand specific information to be input in this step and the background information thereof.

It should be noted that the information required for a user will differ according to the user's skill level. If the user is a beginner-level user, it is important to present the whole picture, e.g., the order of the setting values to be set, the kind of the setting values, etc. Accordingly, such an arrangement preferably supports sequential access. In contrast, for an advanced-level user, such an arrangement preferably supports direct access to each step so as to understand the information thereof. That is to say, such an arrangement is preferably made to allow an advanced-level user to directly access each item.

At first glance, with an arrangement that is capable of specifying machining conditions or the like in the help display as described in Patent document 1, it may seem that such an arrangement provides the user with improved usability. However, help processing is provided based on line and point access, such as sequential access and direct access. In contrast, the input/output processing provided by the interface processing unit 13 using the interface screen supports various kinds of settings, i.e., supports access in the form a planar two-dimensional range, so to speak. Accordingly, in a case of providing the machining processing apparatus 2 with improved help processing, such an arrangement has the potential to degrade the usability of the interface screen having such a range of various kinds of settings.

The present invention provides an arrangement in which the operation by the user via the help processing unit 15 is linked to the display process by the interface processing unit 13, and is not linked to the change of the settings and change of status of the actual machine, such as specification of the machining conditions or an instruction to start machining provided by the control unit 11, for example. This arrangement is suitable for smoothly switching a state in which the user depends on the help processing to a state in which the user uses the interface screen.

Description will be made with reference to Fig. 1B regarding a specific example of the processing.

The control unit 11 judges whether or not an instruction has been made to operate the machining processing apparatus 2 (Step ST1). The control unit 11 waits until an instruction has been made.

When an instruction has been made, the control unit 11 judges whether or not the instruction has been made via the help processing unit 15 (Step ST2). When the instruction has been made without the help processing unit 15, the control unit 11 judges that the instruction has been made via the interface processing unit 13. In this case, according to the instruction, the control unit 11 performs processing (Step ST4) such as modification of the machining conditions stored in the machining conditions storage unit 5, instructing the machining unit 7 to start the machining processing, or the like. Subsequently, the flow proceeds to Step ST5.

When an instruction has been made via the help processing unit 15, the control unit 11 instructs the interface processing unit 13 to display the interface screen in cooperation with the help display via the help processing unit 15 (Step ST3). Subsequently, the flow proceeds to Step ST5.

In Step ST5, the control unit 11 judges whether or not the processing is to be ended. When the processing is not to be ended, the flow returns to Step ST1. When the processing is to be ended, all the processing is ended.

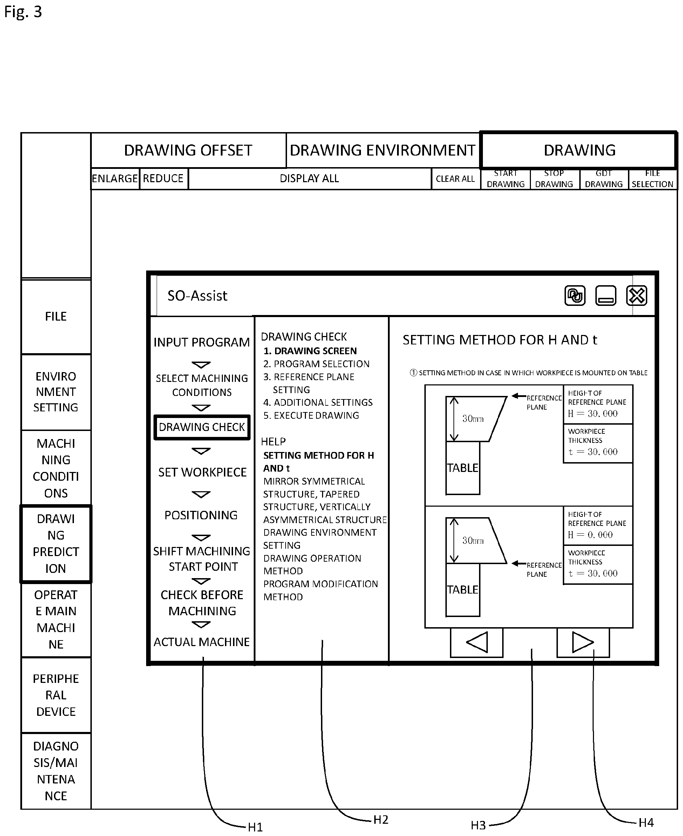

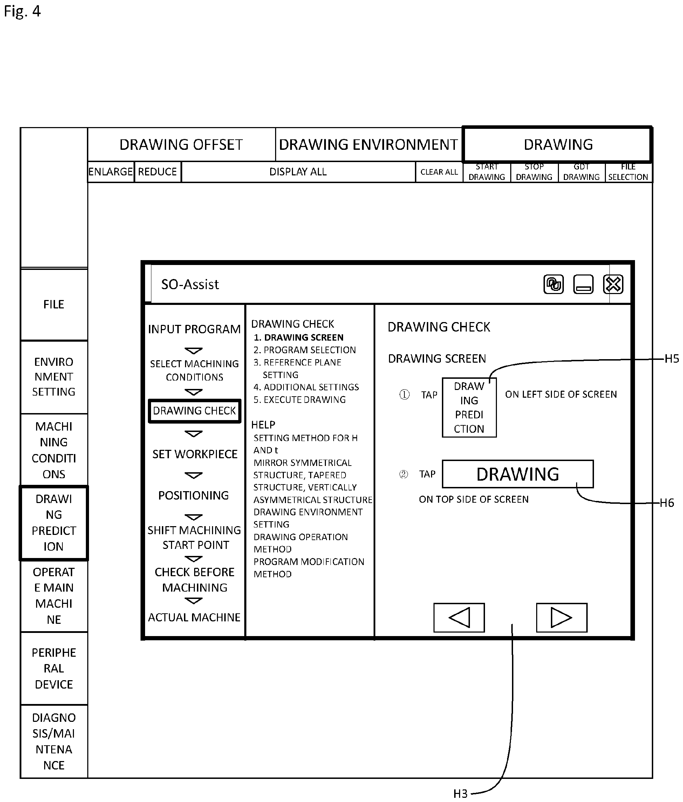

Figs. 3 and 4 each show an example of the display processing provided by the interface processing unit 13 and the help processing unit 15. The help processing unit 15 displays a help screen on the interface screen displayed by the interrace processing unit 13.

In the help display shown in Fig. 3, a display region H1 indicates steps of processes for setting the machining processing. A display region H2 indicates items included in each step. A display region H3 displays descriptions that correspond to each item. By specifying the item H4 in Fig. 3, this arrangement allows the user to switch the display content in the display region H3 to that shown in Fig. 4.

In Fig. 4, in the help display, the display region H3 provides a specific description of each object such as a button or the like displayed by the interface processing unit 13, e.g., objects H5 and H6 to be specified.

In a case in which description is made of an object on the interface screen in the help display as shown in Fig. 4, the help processing unit 15 instructs the control unit 11 to display an interface screen including an object to be explained. The control unit 11 instructs the interface processing unit 13 to display an interface screen including the object to be explained. When the object to be explained is displayed on the current interface screen, the interface processing unit 13 continues to display the interface screen. When the object to be explained is not displayed on the current interface screen, the interface processing unit 13 switches the current interface screen to the interface screen on which the object to be explained is displayed. With this, the help processing unit 15 and the interface processing unit 13 operate in cooperation with each other so as to display an interface screen on which the object is displayed. On the other hand, when the machining conditions or the like are to be changed using an object displayed on the help display screen, the control unit 11 prohibits a modification according to an instruction from the help processing unit 15. With this, the user must use the interface screen to make a setting such as a modification of the machining conditions. That is to say, the help processing unit 15 does not instruct the machining unit 7 to perform machining processing.

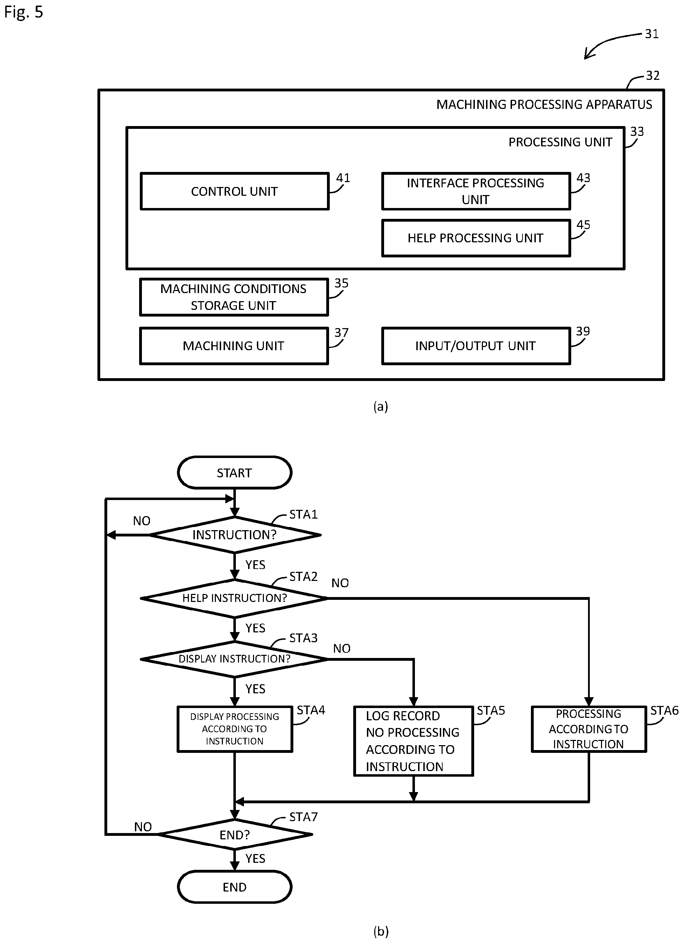

Fig. 5A is a block diagram showing an example configuration of a machining processing system according to another embodiment of the present invention. Fig. 5B is a flowchart showing an example of the processing. Description will be made with reference to Figs. 5A and 5B regarding an example of the configuration of a machining processing system 31 and the processing.

The machining processing system 31 is provided with a machining processing apparatus 32. The machining processing apparatus 32 includes a processing unit 33, a machining conditions storage unit 35, a machining unit 37, and an input/output unit 39. The processing unit 33 includes a control unit 41, an interface processing unit 43, and a help processing unit 45.

The machining conditions storage unit 35, the machining unit 37, the input/output unit 39, the control unit 41, the interface processing unit 43, and the help processing unit 45 basically support the same operations as those of the machining conditions storage unit 5, the machining unit 7, the input/output unit 9, the control unit 11, the interface processing unit 13, and the help processing unit 15, respectively.

Description will be made with reference to Fig. 5B regarding a specific example of the processing.

The control unit 41 judges whether or not an instruction has been made via the machining processing apparatus 32 to operate (Step STA1). The control unit 41 waits until an instruction has been made.

When an instruction has been made, the control unit 41 judges whether or not the instruction has been made via the help processing unit 45 (Step STA2). When the instruction has been made without the help processing unit 45, the control unit 41 judges that the instruction has been made via the interface processing unit 43. In this case, according to the instruction, the control unit 41 performs processing (Step STA6) such as modification of the machining conditions stored in the machining conditions storage unit 35, instructing the machining unit 37 to start the machining processing, or the like. Subsequently, the flow proceeds to Step STA7.

When an instruction has been input via the help processing unit 45, the control unit 41 judges whether or not an instruction has been made for a display on the interface screen (Step STA3). When an instruction is made for a display on the interface screen, the control unit 41 instructs the interface processing unit 43 to perform display processing on the interface screen in cooperation with the help display provided by the help processing unit 43 (Step STA4). Subsequently, the flow proceeds to Step STA7. When an instruction has been made that does not relate to the display on the interface screen, the control unit 41 performs no processing according to the instruction. Instead, the control unit 41 records such an instruction in a log (Step STA5). The flow proceeds to Step STA7.

In Step STA7, the control unit 41 judges whether or not the processing is to be ended. When the processing is not to be ended, the flow returns to Step STA1. When the processing is to be ended, all the processing is ended.

The machining conditions storage unit 55, the machining unit 57, the main body input/output unit 59, the control unit 61, the interface processing unit 63, and the help processing unit 65 basically support the same operations as those of the machining conditions storage unit 5, the machining unit 7, the input/output unit 9, the control unit 11, the interface processing unit 13, and the help processing unit 15 shown in Fig. 1, respectively.

The machining processing apparatus 52 further includes a main body communication unit 71. The main body communication unit 71 communicates with the terminal device 73.

The terminal device 73 includes a terminal processing unit 75, a terminal communication unit 77, and a terminal input/output unit 79. The terminal processing unit 75 includes a terminal help processing unit 81.

The terminal communication unit 77 communicates with the machining processing apparatus 52.

The terminal help processing unit 81 provides the terminal input/output unit 79 with information for supporting input by the user via the interface processing unit 63 in the same manner as in the help processing unit 65. The terminal help processing unit 81 does not instruct the machining unit 7 to perform machining processing.

The control unit 61 judges whether or not an instruction has been made to operate the machining processing apparatus 52. The control unit 61 waits until an instruction has been made.

Upon receiving an instruction, the control unit 61 judges whether or not the instruction has been made via the help processing unit 65 and/or the terminal help processing unit 81. When the instruction has been made via the interface processing unit 63 instead of the help processing unit 65 or the terminal help processing unit 81, the control unit 61 performs processing according to the instruction.

When the instruction has been made via the help processing unit 65 and/or the terminal help processing unit 81, the control unit 61 judges whether or not the instruction relates to a display on the interface screen. When the instruction relates to a display on the interface screen, the control unit 61 instructs the interface processing unit 63 to perform display processing for the interface screen in cooperation with a help display provided by the help processing unit 65 and/or the terminal help processing unit 81. When the instruction does not relate to a display on the interface screen, the control unit 61 performs no processing according to the instruction. Instead, the control unit 61 records the instruction in a log.

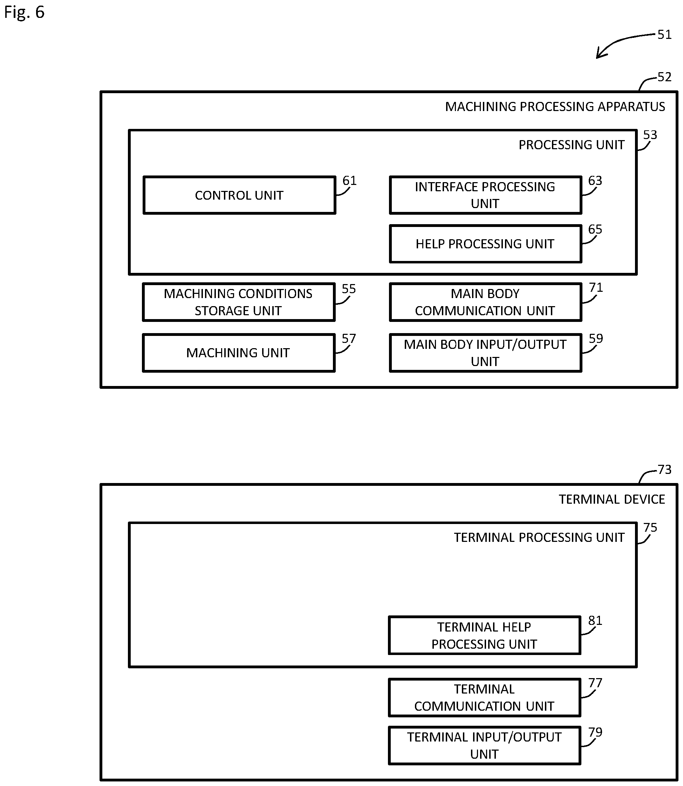

As shown in Figs. 3 and 4, with the machining processing apparatus 52, in a case in which a help display is provided such that it is superimposed on the interface screen, this leads to difficulty in the user viewing the interface screen. With such an arrangement employing the terminal device 73 that is a different device from the machining processing apparatus 52 as shown in Fig. 6, this does not require superimposition of a help display on the interface screen.

In addition to an instruction from the user via the interface processing unit 63, the control unit 61 receives an instruction via the help processing unit 65 and the terminal help processing unit 81. In particular, it is difficult for the machining processing apparatus 52 to manage the terminal help processing unit 81. With the present invention, if a program for supporting the terminal help processing unit 81 is modified via the terminal device 73, the terminal help processing unit 81 is capable of providing a display via the interface processing unit 63 in cooperation with the operation of the terminal help processing unit 81. However, the terminal help processing unit 81 is not allowed to modify the machining conditions or the like. Accordingly, in a case in which the settings of the machining processing apparatus 52 are to be modified or the operation thereof is to be started, the user must actually operate the interface screen displayed by the interface processing unit 63. This prevents the terminal help processing unit 81 from affecting the settings of the machining processing apparatus 52, machining processing thereof, etc., thereby providing the machining processing apparatus 52 with improved security.

### Reference Signs List

1, 31, 51 machining processing system, 2, 32, 52 machining processing apparatus, 3, 33, 53 processing unit, 5, 35, 55 machining conditions storage unit, 7, 37, 57 machining unit, 9, 39 input/output unit, 11, 41, 61 control unit, 13, 43, 63 interface processing unit, 15, 45, 65 help processing unit, 59 main body input/output unit, 71 main body communication unit, 73 terminal device, 75 terminal processing unit, 77 terminal communication unit, 79 terminal input/output unit, 81 terminal help processing unit.

## Claims

1. A machining processing system provided with a machining processing apparatus configured to support machining processing for a workpiece according to a plurality of setting processes made by a user,
wherein the machining processing apparatus comprises:
a processing unit;
a machining unit configured to support machining processing; and
an input/output unit configured to support input/output processing,
wherein the processing unit comprises a control unit, an interface processing unit, and a help processing unit,
wherein the interface processing unit operates according to control of the control unit, displays an interface screen via the input/output unit, and makes an instruction to the control unit according to an operation by the user,
wherein the help processing unit provides a help display including a first display region, a second display region, and a third display region,
wherein the first display region displays each step of a setting process for machining processing,
wherein the second display region displays items included in each step;
wherein the third display region displays an explanation for each item,
wherein, when an object on an interface screen is to be explained in the third display region, the help processing unit instructs the control unit to display an interface screen including the object to be explained,
wherein the help processing unit does not instruct the machining unit to perform machining processing,
wherein the control unit controls the machining unit of the machining processing apparatus according to an instruction from the interface processing unit,
and wherein, upon receiving an instruction from the help processing unit to change the interface screen, the control unit controls the interface processing unit to change the interface screen.

2. The machining processing system according to claim 1, wherein, when the interface screen that is being displayed in a current stage includes all of one or a plurality of objects to be explained, the control unit continues to display the interface screen that is being displayed in the current stage,
and wherein, when the interface screen that is being displayed in a current stage does not include all of one or a plurality of objects to be explained, the control unit switches the interface screen that is being displayed in the current stage to an interface screen including all the objects to be explained.

3. The machining processing system according to claim 1, wherein, when the instruction from the help processing unit is not an instruction relating to a display of an interface screen, the control unit does not perform processing according to the instruction.

4. The machining processing system according to claim 1, comprising a terminal device that differs from the machining processing apparatus,
wherein the terminal device is capable of communicating with the machining processing apparatus, and comprises a terminal processing unit and a terminal input/output unit,
wherein the terminal processing unit comprises a terminal help processing unit,
wherein the terminal help processing unit displays an explanation with respect to an operation by the user via the terminal input/output unit and makes an instruction to the control unit, according to an instruction by the user,
wherein the terminal help processing unit does not instruct the machining unit to perform machining processing,
wherein, upon receiving an instruction from the terminal help processing unit to change the interface screen, the control unit controls the interface processing unit to change the interface screen,
and wherein, upon receiving an instruction that is not related to a display of the interface screen from the terminal help processing unit, the control unit does not perform processing according to the instruction.

5. A help processing method employed in a machining processing system provided with a machining processing apparatus configured to support machining processing for a workpiece according to a plurality of setting processes made by a user,
wherein the machining processing apparatus comprises:
a processing unit;
a machining unit configured to support machining processing; and
an input/output unit configured to support input/output processing,
wherein the processing unit comprises a control unit, an interface processing unit, and a help processing unit,
wherein the interface processing unit operates according to control of the control unit, displays an interface screen via the input/output unit, and makes an instruction to the control unit according to an operation by the user,
wherein the help processing unit provides a help display including a first display region, a second display region, and a third display region,
wherein the first display region displays each step of a setting process for machining processing,
wherein the second display region displays items included in each step;
wherein the third display region displays an explanation for each item,
wherein, when an object on an interface screen is to be explained in the third display region, the help processing unit instructs the control unit to display an interface screen including the object to be explained,
wherein the help processing unit does not instruct the machining unit to perform machining processing,
wherein the control unit controls the machining unit of the machining processing apparatus according to an instruction from the interface processing unit,
and wherein, upon receiving an instruction from the help processing unit to change the interface screen, the control unit controls the interface processing unit to change the interface screen.

6. The help processing method according to claim 5, wherein, when the interface screen that is being displayed in a current stage includes all of one or a plurality of objects to be explained, the control unit continues to display the interface screen that is being displayed in the current stage,
and wherein, when the interface screen that is being displayed in a current stage does not include all of one or a plurality of objects to be explained, the control unit switches the interface screen that is being displayed in the current stage to an interface screen including all the objects to be explained.

7. The help processing method according to claim 5, wherein, when the instruction from the help processing unit is not an instruction relating to a display of an interface screen, the control unit does not perform processing according to the instruction.

8. The help processing method according to claim 5, wherein a terminal device that differs from the machining processing apparatus is provided,
wherein the terminal device is capable of communicating with the machining processing apparatus, and comprises a terminal processing unit and a terminal input/output unit,
wherein the terminal processing unit comprises a terminal help processing unit,
wherein the terminal help processing unit displays an explanation with respect to an operation by the user via the terminal input/output unit and makes an instruction to the control unit, according to an instruction by the user,
wherein the terminal help processing unit does not instruct the machining unit to perform machining processing,
wherein, upon receiving an instruction from the terminal help processing unit to change the interface screen, the control unit controls the interface processing unit to change the interface screen,
and wherein, upon receiving an instruction that is not related to a display of the interface screen from the terminal help processing unit, the control unit does not perform processing according to the instruction.
